(19) Europäisches Patentamt
European Patent Office
Office européen des brevets

(11) **EP 1 184 408 A2**

(12) **EUROPEAN PATENT APPLICATION**

(43) Date of publication:
**06.03.2002 Bulletin 2002/10**

(51) Int Cl.$^7$: **C08J 7/06**, B01F 17/00

(21) Application number: **01119766.2**

(22) Date of filing: **28.08.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Sawada, Hidetsugu**<br>  **Moriyama-shi, Shiga-ken (JP)**<br>• **Fukukita, Tsuyoshi**<br>  **Kurita-gun, Shiga-ken (JP)**<br>• **Fukuoka, Mamoru**<br>  **Yachimata-shi, Chiba-ken (JP)** |
| (30) Priority: **31.08.2000 JP 2000262490** | |
| (71) Applicant: **DAINIPPON INK AND CHEMICALS, INC.**<br>**Itabashi-ku Tokyo (JP)** | (74) Representative: **Albrecht, Thomas, Dr. et al**<br>**Kraus & Weisert, Thomas-Wimmer-Ring 15**<br>**80539 München (DE)** |

(54) **Anti-fog resin sheet, anti-fog agent and molded article**

(57) An anti-fog resin sheet provides anti-fog effects in a molded article, especially anti-fog effects in the molded article under low-temperature conditions, which are remarkably enhanced, and an anti-fog agent used in the same, and a molded article having excellent anti-fog effects. The anti-fog resin sheet comprises a resin sheet and an anti-fog coating film formed on the surface of the resin sheet, wherein the anti-fog coating film is composed of a nonionic surfactant (A) and a metal carboxylate salt compound (B) and the metal carboxylate salt compound (B) has a hydrate forming ability and is in an amorphous state. The anti-fog agent comprising a nonionic surfactant (A), a metal carboxylate salt compound (C) having a hydrate forming ability, and a metal ion (D) of a metal atom having a first ionization energy which is higher than that of a metal ion in the metal carboxylate salt compound (C). The molded article is produced by molding the anti-fog resin sheet.

EP 1 184 408 A2

**Description**

BACKGROUND OF THE INVENTION

1. FIELD OF THE INVENTION

The present invention relates to an anti-fog resin sheet which yields superior anti-fog effects, to covers of lunch boxes, side-dish containers or the like, to a resin sheet coated with the anti-fog agent, and to a molded article made from the resin sheet.

2. DESCRIPTION OF RELATED ART

Sheets produced by extruding typical transparent resins such as polystyrene, polypropylene, polyethylene terephthalate and copolymers thereof into a film have been widely used as light-weight packaging containers for food and as packaging containers for other goods after heat forming using a vacuum forming machine, a hot plate pressure forming machine, or a vacuum pressure forming machine.

These molded articles of resin sheets are often used as materials for covers of lunch boxes, side-dish containers or the like. In this case, the surface of the molded article is generally subjected to an anti-fog treatment. However, the treated molded articles are generally unsatisfactory in performance and also caused problems in that water droplets formed on the inner surface of the molded article, thereby obscuring the view of the contents and drastically lowering commercial values when displayed or stored at low temperatures in a refrigerated display case.

To solve the problems described above, Japanese Patent Application, First Publication No. Hei 10-139907 discloses a technique using a sucrose fatty acid ester in combination with a polyglycerin fatty acid ester as an anti-fog agent capable of uniformly coating the sheet surface.

However, according to the technique disclosed in Japanese Patent Application, First Publication No. Hei 10-139907, although anti-fog effects of the sheet itself are improved to some extent, anti-fog effects of the molded article are still insufficient and anti-fog effects under low-temperature conditions of 10°C or less were particularly insufficient.

BRIEF SUMMARY OF THE INVENTION

Objects of the present invention are to provide an anti-fog resin sheet wherein anti-fog effects of a molded article under low-temperature conditions are remarkably enhanced, an anti-fog agent used for the anti-fog resin sheet, and a molded article having excellent anti-fog effects which have not been achieved conventionally.

As a result of intensive research to achieve the object described above, the present inventors found that the use of a nonionic surfactant in combination with at least two metal carboxylate salt compounds, as a material for an anti-fog coating film of the surface of a resin sheet, can remarkably improve anti-fog effects of a molded article, especially anti-fog effects of the molded article in a low-temperature environment, thus completing the present invention.

The present invention is directed to an anti-fog resin sheet comprising a resin sheet and an anti-fog coating film formed on the surface of the resin sheet, wherein the anti-fog coating film is composed of a nonionic surfactant (A) and a metal carboxylate salt compound (B), and the metal carboxylate salt compound (B) has a hydrate forming ability and is in an amorphous state.

Another aspect of the present invention is directed to an anti-fog agent comprising a nonionic surfactant (A), a metal carboxylate salt compound (C) having a hydrate forming ability, and a metal ion (D) of a metal atom having a first ionization energy which is higher than that of a metal ion in the metal carboxylate salt compound (C).

Yet another aspect of the present invention is directed to a molded article produced by molding the anti-fog resin sheet.

According to the present invention, a molded article having superior anti-fog effects, especially anti-fog effects under low-temperature conditions, can be obtained. The anti-fog resin sheet and molded article thereof of the present invention do not change over time with respect to appearance.

Accordingly, the molded article of the present invention is particularly suited for use as anti-fog transparent covers for food containers such as lunch boxes, side-dish containers, sushi containers, sashimi containers and the like.

DETAILED DESCRIPTION OF THE INVENTION

The present invention will now be described in detail.

The anti-fog resin sheet comprises a resin sheet and an anti-fog coating film formed on the surface of the resin sheet, wherein the anti-fog coating film is composed of a nonionic surfactant (A) and a metal carboxylate salt compound (B).

The nonionic surfactant (A), which constitutes the anti-fog coating layer, effectively reduces surface tension of water droplets, thereby enhancing anti-fog effects of the molded article. The HLB (hydrophilic-lipophilic balance) value thereof is preferably from 10 to 18 because anti-fog effects of the molded article and duration thereof are enhanced.

In the present invention, the higher the HLB value, the more anti-fog effects are enhanced. In the case in which the HLB value exceeds 18, the anti-fog agent is easily washed off when water droplets adhere on the surface to be coated with the anti-fog agent. Therefore, the HLB value is preferably within the above range in order to provide the molded article with anti-fog effects and the duration thereof.

Examples of the nonionic surfactant (A) include sorbitan fatty acid esters such as polyoxyethylene sorbitan monolaurate, polyoxyethylene sorbitan monopalmitate, polyoxyethylene sorbitan monooleate, or sorbitan monostearate ester; sucrose fatty acid esters such as sucrose laurate ester or sucrose stearate ester; polyglycerin fatty acid esters such as diglycerin stearate, diglycerin laurate stearate, tetraglycerin stearate, tetraglycerin laurate stearate, hexaglycerin stearate, hexaglycerin laurate stearate, decaglycerin stearate, or decaglycerin laurate stearate; polyoxyethylene alkenyl ethers such as polyoxyethylene oleyl ether; and polyoxyethylene derivatives such as polyoxyethylene octyl phenyl ether, polyoxyethylene nonyl phenyl ether, polyoxyethylene dodecyl phenyl ether, polyoxyethylene oleate, polyoxyethylene stearate, or polyoxyethylene distearate. These compounds may be used alone, or two or more compounds may be used in combination.

Among these compounds, sucrose fatty acid esters are particularly preferred in view of anti-fog effects and anti-fog duration.

The metal carboxylate salt compound (B), as another component which constitutes the anti-fog coating layer, has a hydrate forming ability and has a feature that it can form a hydrate crystal in the case in which it exists in the form of a single compound in air at normal temperature, while it is in an amorphous state in the coating layer. The use of such a metal carboxylate salt compound (B) as a component of the anti-fog coating layer exerts the effect of effectively adsorbing moisture in a vapor phase thereby reducing the contact angle of water droplets adhering on the sheet surface.

As used herein, the term "amorphous state" refers to a substantially amorphous state in which visible crystals do not exist anywhere in the entire coating layer and invisible crystallites may be included.

As described above, such a metal carboxylate salt compound (B) has a hydrate forming ability and may be in an amorphous state in the coating layer. To provide it with such an ability, any metal carboxylate salt compound (B) can be selected. In the present invention, however, it is preferred that a metal carboxylate salt compound (B1) having a hydrate forming ability (hereinafter abbreviated to "compound (B1)") and a metal carboxylate salt compound (B2) (hereinafter abbreviated to "compound (B2)") composed of the same carboxylate anion as that of the compound (B1) and a metal ion different from that of the compound (B1), that is, the compound (B1) and the compound (B2), coexist in the coating film.

That is, coexistence of the compound (B1) and the compound (B2) in the coating layer makes it possible to prevent the compound (B1) from crystallizing in the form of a hydrate as a result of moisture adsorption, leading to a remarkable effect of satisfactorily maintaining the appearance of the resin sheet and appearance of the molded article. To further improve this effect, the molar ratio of the compound (B1) to the compound (B2) in the anti-fog coating film, (B1/B2), is preferably from $10^4/1$ to $10^2/1$.

The compound (B1) may be a metal carboxylate salt compound capable of forming a hydrate and those having 2 to 8 carbon atoms are particularly preferred. Specifically, the compound (B1) is an anhydrate from among the compounds (B'), which include compounds (which are contained in the anti-fog agents and which are described in detail below) having metal carboxylate salt structures and being capable of forming hydrates and which also include hydrates thereof, or the compound (B1) is an dehydrated compound of a hydrate from among the compounds (B').

Specific examples thereof include metal salts of organic acids (e.g., monopotassium citrate, tripotassium citrate, trisodium citrate, monosodium succinate, disodium succinate, sodium DL-tartrate, sodium L-tartrate, sodium DL-malate, sodium L-malate, calcium L-lactate, sodium acetate, sodium propionate, calcium propionate, potassium sorbate, sodium benzoate, iron lactate, etc.), sodium L-glutamate, or sodium L-aspartate.

Among these compounds, disodium succinate, disodium L-tartrate, trisodium citrate, sodium acetate, and monosodium L-glutamate are particularly preferred because they exert excellent anti-fog effects.

As described above, the compound (B2) is a metal carboxylate salt compound composed of the same carboxylate anion as that of the compound (B1) and a metal ion different from that of the compound (B1).

Examples of the combination of the metal ion in the compound (B1) and the metal ion in the compound (B2) include combinations such as $K^+/Na^+$, $K^+/Ca^{2+}$, $K^+/Mg^{2+}$, $K^+/Fe^{2+}$, $Na^+/Ca^{2+}$, $Na^+/Mg^{2+}$, $Na^+/Fe^{2+}$, $Ca^{2+}/Mg^{2+}$, $Ca^{2+}/Fe^{2+}$, and $Mg^{2+}/Fe^{2+}$. Among these combinations, a combination of a metal ion of sodium or a metal atom having a first ionization energy which is lower than that of sodium as the metal ion in the compound (B1) and a metal ion of a metal atom having a first ionization energy which is higher than that of sodium as the metal ion in the compound (B2) is particularly preferred because crystal deposition on the resin sheet surface and the molded article surface can be satisfactorily prevented and anti-fog effects are further enhanced.

As used herein, the term "first ionization energy" (or first ionization potential) means a quantity of energy required to convert the metal atom into a monovalent ion. One example thereof is shown below.

K (419) < Na (496) < Ca (590) < Mg (737) < Fe (762)

(numbers in the parentheses represent a quantity of first ionization energy, units: kJ/mol)

The compound (B1) is a component to be incorporated into the dry coating layer in the form of a salt without causing an ion-exchange reaction between the "metal carboxylate salt compound (C) having a hydrate forming ability", which exists in the anti-fog agent described below of the present invention, and the "metal ion (D)" after the coating layer was formed and dried.

The compound (B2) is a component to be incorporated into the dry coating layer after being formed by the ion-exchange reaction between the "metal carboxylate salt compound (C) having a hydrate forming ability", which exists in the anti-fog agent described below of the present invention, and the "metal ion (D)".

Regarding the ratio of the nonionic surfactant (A) to the metal carboxylate salt compound (B), both of which constitute the coating layer, the amount of the metal carboxylate salt compound (B) is within a range from 0.1 to 1 part by weight based on 1 part by weight of the nonionic surfactant (A) because anti-fog effects under low-temperature conditions are enhanced.

Such an anti-fog resin sheet can be produced by coating a resin sheet with the anti-fog agent described below of the present invention.

Specifically, the method of coating the resin sheet with the anti-fog agent is a method of subjecting the surface of the resin sheet to a hydrophilization treatment, coating the treated surface with the anti-fog agent by one of the following coaters or by coating using an applicator system, and evaporating the aqueous medium.

Examples of the coater used herein include a spray coater, roll coater, gravure coater, knife coater, air knife coater, and rotor dampening machine.

Examples of the hydrophilization treatment of the resin sheet surface include acid treatment, flame treatment, and corona treatment. When the wetting coefficient of the sheet surface subjected to the hydrophilization treatment is 380 $\mu$N/cm or more, the surface can be coated with the anti-fog agent. In the case of continuously coating with the anti-fog agent, the wetting coefficient is preferably within a range from 500 to 600 $\mu$N/cm because good coatings are obtained.

Quantitative analysis of the coating weight of the anti-fog agent can be conducted by an analysis method using Fourier transform infrared spectroscopy (multiple internal reflection method) (FTIR analysis method (ATR method)). The amount of the anti-fog agent to be coated on the sheet of the present invention is preferably within a range from 5 to 1000 mg/m$^2$, and particularly preferably from 10 to 150 mg/m$^2$ in terms of dry weight, because anti-fog effects are enhanced and poor appearance due to coating unevenness is less likely to occur.

The resin used in the resin sheet of the present invention is not specifically limited, but is preferably a transparent thermoplastic resin, and preferred examples thereof include styrene resin such as polystyrene, crystalline polystyrene, styrene-butadiene copolymer, styrene-butadiene-styrene copolymer, transparent styrene-butadiene-alkyl (meth)acrylate ester copolymer, styrene-(meth)acrylic acid copolymer, styrene-maleic anhydride copolymer, or styrene-alkyl (meth)acrylate ester copolymer; polypropylene resin such as polypropylene, propylene-butadiene copolymer, or ethylene-propylene copolymer; polycarbonate; polyvinyl chloride; polyvinylidene chloride; polyamide such as nylon 6; and polyester resin such as polyethylene terephthalate. Two or more kinds of these resins may be used in combination as long as the transparency of the resulting resin sheet is not adversely affected. The sheet obtained from these resins may be a multi-layer sheet composed of two or more layers using one or more resins. Furthermore, these sheets may be subjected to a monoaxial or biaxial drawing treatment.

The thickness of these resin sheets is not specifically limited, but is preferably within a range from 0.05 to 1.0 mm because of good heat formability in the case of the heat forming of the sheet. In the case in which the sheet is formed into a bag by heat sealing and the resulting bag is used as a bag for food packaging, the thickness is within a range from 0.005 to 0.1 mm in view of characteristics necessary for forming a bag.

For the purpose of preventing the resin sheets from becoming blocked, various fine particles for forming protrusions on the sheet surface can be added to the resin used in these resin sheets as long as the transparency of the sheet is not adversely affected. The present invention has a feature that excellent anti-fog effects are exerted even if protrusions for preventing blocking are formed.

Examples of fine particles include crosslinked resin beads such as styrene crosslinked resin beads, (meth)acrylate ester crosslinked resin beads, or polyurethane crosslinked resin beads; fine inorganic particles made of silica, hydrophobized silica, spherical silica, precipitated calcium carbonate, titanium oxide, or talc; and fine rubber particles.

These fine particles may be incorporated during melt-kneading before forming a sheet and the method of adding fine rubber particles includes, for example, a method of using a rubber-containing resin in combination as a portion of the resin component. The rubber-containing resin used herein differs from the resin used as a base material of the resin sheet, and examples thereof include high-impact polystyrene (HIPS), styrene-acrylonitrile-butadiene copolymer (ABS), styrene-ethylene-butadiene-styrene copolymer (SEBS), styrene-butadiene-(meth)acrylate ester copolymer (MBS), and high-impact (meth)acrylate ester (HI-PMMA).

However, since too rough a surface inhibits spread of water droplets adhering on the surface and a film of water is difficult to form, the above-described fine particles are preferably added so that the center line average roughness Ra of the molded article obtained by heat forming is 0.15 µm or less.

The center line average roughness Ra is calculated from a surface roughness curve obtained by using a surface roughness and contour measuring instrument in accordance with Japanese Industrial Standard (JIS B0601-1994). The center line average roughness Ra is a value which represents the extent of unevenness of the surface per sampling distance. The larger the value, the rougher the surface. The smaller the value, the smoother the surface.

The smaller the center line average roughness Ra of the surface coated with the anti-fog agent of the molded article, the smoother the surface, and thus water droplets adhering on the surface are liable to spread, and anti-fog effects are enhanced. When the center line average roughness Ra of the surface coated with the anti-fog agent of the molded article is greater than the above range, unevenness of the surface inhibits water droplets adhering on the surface from spreading, resulting in poor anti-fog effects.

In the anti-fog resin sheet of the present invention, the surface opposite to the surface to be coated with the anti-fog agent may be coated with a silicone oil or a silicone emulsion to improve the releasability of the sheet from the mold and the releasability between molded articles. After coating the resin sheet surface with the anti-fog resin agent of the present invention and drying the anti-fog resin agent, the coated surface may be coated with the silicone oil or silicone emulsion. Surfactants and lubricants, which have an antistatic effect, can be added in the silicone oil or silicone emulsion.

The anti-fog agent of the present invention will now be described in detail.

The anti-fog agent of the present invention has a feature that it comprises a nonionic surfactant (A), a metal carboxylate salt compound (C) having a hydrate forming ability, and a metal ion (D) of a metal atom having a first ionization energy which is higher than that of a metal ion in the metal carboxylate salt compound (C).

The nonionic surfactant (A) used herein is as described in detail previously.

The metal carboxylate salt compound (C) having a hydrate forming ability (hereinafter abbreviated to "compound (C)") is capable of forming a hydrate in a solid crystal state in air at normal temperature, and it is coated on the resin sheet surface as an anti-fog agent and is then dehydrated on the resin sheet surface by drying to form the compound (B1) and the compound (B2).

The compound (C) preferably has 2 to 8 carbon atoms in view of superior hydrophilicity and preferably has a solubility of 20 g or more at 10°C in 100 ml of water. In this case, a uniform film of water is easily formed on the surface of the sheet and the molded article, and anti-fog effects are further enhanced.

The compound (C) is a hydrate in a solid crystal state at normal temperature in air, or a compound obtained by dissolving an anhydride thereof in an aqueous medium. Specific examples thereof include metal salts of organic acids such as monopotassium citrate, tripotassium citrate, trisodium citrate, monosodium succinate, sodium DL-tartrate, disodium L-tartrate, sodium DL-malate, sodium L-malate, calcium L-lactate, sodium acetate, sodium propionate, calcium propionate, potassium sorbate, sodium benzoate, or iron lactate; and metal aminoate salt such as sodium L-glutamate or sodium L-aspartate.

When using hydrates of these compounds as a raw material, examples of the hydrate include metal salt hydrates of organic acids such as monopotassium citrate monohydrate, monopotassium citrate dihydrate, monopotassium citrate tetrahydrate, tripotassium citrate monohydrate, tripotassium citrate dihydrate, trisodium citrate dihydrate, trisodium citrate trihydrate, monosodium succinate trihydrate, disodium succinate monohydrate, disodium succinate hexahydrate, sodium DL-tartrate monohydrate, disodium L-tartrate dihydrate, sodium DL-malate 0.5 hydrate, sodium DL-malate monohydrate, sodium DL-malate dihydrate, sodium DL-malate tetrahydrate, calcium L-lactate 4.5 hydrate, sodium acetate trihydrate, sodium propionate monohydrate, calcium propionate monohydrate, calcium propionate trihydrate, potassium sorbate monohydrate, sodium benzoate monohydrate, or iron lactate trihydrate; and metal aminoate salt hydrates such as sodium L-glutamate monohydrate or sodium L-aspartate monohydrate.

The metal atom constituting the metal carboxylate salt in the compound (C) is preferably a sodium atom, or a metal atom having a first ionization energy which is lower than that of the sodium atom, in view of superior solubility in aqueous media, superior affinity with water droplets, and remarkable effects of spreading water droplets adhering to the resin sheet surface.

When using a hydrate as the raw material of the compound (C), after heat forming the sheet, the dehydration reaction preferably proceeds to some extent in view of obtaining superior effects of spreading water droplets. Accordingly, the dehydration temperature of the hydrate is, more preferably, lower than the heat forming temperature.

Among specific examples described above, disodium succinate, disodium L-tartrate, trisodium citrate, sodium acetate and monosodium L-glutamate are preferred as the compound (C) in view of superior anti-fog effects. In the preparation of the anti-fog agent, hydrates of these compounds, for example, disodium succinate hexahydrate, disodium L-tartrate dihydrate, trisodium citrate dihydrate, sodium acetate trihydrate and monosodium L-glutamate monohydrate are in particular preferably used.

The mixing ratio of the compound (C) is preferably within a range from 0.1 to 1 part by weight, and particularly preferably from 0.3 to 0.8 parts by weight, based on 1 part by weight of the nonionic surfactant (A) because the effect of spreading water droplets adhering on the surface of the sheet and molded article is high, and layer breakage is less likely to occur at the deep drawn portion.

The metal ion (D), which exists in the anti-fog agent of the present invention, is a metal ion of a metal atom having a first ionization energy which is higher than that of the metal atom in the compound (C). Since the compound (C) exists in the form of a hydrate in a solid crystal state at normal temperature in air, when the resin sheet is coated with the anti-fog agent containing no metal ion (D), the crystal is deposited in the form of dendrites over time, resulting in poor appearance of the sheet and the molded article.

According to the present invention, when the anti-fog agent contains, as an essential component, the metal ion (D) having a first ionization energy which is higher than that of the metal atom in the compound (C), the ion-exchange reaction between the metal ion (D) and the compound (C) causes the formation of a compound (B2), thereby making it possible to satisfactorily control crystal deposition over time and to avoid poor appearance of the resin sheet and the molded article.

The combination of the metal ion, which is contained in the compound (C) and is introduced into the anti-fog agent, and the metal ion (D) is the same as that between the metal ion in the compound (B1) in the anti-fog coating film and the metal ion in the compound (B2). Specific examples thereof include combinations such as $K^+/Na^+$, $K^+/Ca^{2+}$, $K^+/Mg^{2+}$, $K^+/Fe^{2+}$, $Na^+/Ca^{2+}$, $Na^+/Mg^{2+}$, $Na^+/Fe^{2+}$, $Ca^{2+}/Mg^{2+}$, $Ca^{2+}/Fe^{2+}$, and $Mg^{2+}/Fe^{2+}$. Among these combinations, a combination of a metal ion of sodium or a metal atom having a first ionization energy which is lower than that of sodium as the metal ion, which is included in the compound (C) and is introduced into the anti-fog agent, and a metal ion of a metal atom having a first ionization energy which is higher than that of sodium as the metal ion (D) is particularly preferred in view of larger duration of anti-fog effects, and a combination of $Na^+/Ca^{2+}$ is most preferred.

The metal ion (D) can be introduced into the anti-fog agent by dissolving a water-soluble metal salt compound (D') in an aqueous medium.

Specific examples of the water-soluble metal salt compound (D') include water-soluble inorganic metal compounds such as magnesium chloride and calcium chloride, hydrates thereof, specific examples of the compound (C), and other metal salts of organic acid.

Specific examples thereof include calcium-containing compounds such as calcium L-lactate, calcium L-lactate 4.5 hydrate, calcium propionate, calcium propionate monohydrate, calcium propionate trihydrate, calcium tartrate, calcium tartrate tetrahydrate, calcium citrate, calcium citrate tetrahydrate, stearoyl calcium lactate, calcium chloride, calcium chloride hexahydrate, calcium carbonate hexahydrate, or calcium hydroxide; and magnesium-containing compounds such as magnesium L-glutamate, magnesium chloride, magnesium chloride hexahydrate, or magnesium oxide.

Specifically, the following combinations of the compound (C) used in the present invention or a hydrate thereof and the water-soluble compound (D') are preferred.

(1) Examples of the combination of the sodium salt of an organic acid or a hydrate thereof and the calcium-containing compound include disodium succinate/calcium L-lactate 4.5 hydrate, disodium succinate hexahydrate/calcium propionate monohydrate, disodium succinate hexahydrate/calcium tartrate tetrahydrate, disodium succinate hexahydrate/calcium citrate, disodium succinate hexahydrate/stearoyl calcium lactate, disodium succinate hexahydrate/calcium chloride hexahydrate, disodium succinate hexahydrate/calcium carbonate, disodium succinate hexahydrate/calcium hydroxide, disodium L-tartrate dihydrate/calcium L-lactate 4.5 hydrate, disodium L-tartrate dihydrate/calcium propionate monohydrate, disodium L-tartrate dihydrate/calcium tartrate tetrahydrate, disodium L-tartrate dihydrate/calcium citrate, disodium L-tartrate dihydrate/stearoyl calcium lactate, disodium L-tartrate dihydrate/calcium chloride hexahydrate, disodium L-tartrate dihydrate/calcium carbonate, disodium L-tartrate dihydrate/calcium hydroxide, trisodium citrate dihydrate/calcium L-lactate 4.5 hydrate, trisodium citrate dihydrate/calcium propionate monohydrate, trisodium citrate dihydrate/calcium tartrate tetrahydrate, trisodium citrate dihydrate/calcium citrate, trisodium citrate dihydrate/stearoyl calcium lactate, trisodium citrate dihydrate/calcium chloride hexahydrate, trisodium citrate dihydrate/calcium carbonate, trisodium citrate dihydrate/calcium hydroxide, sodium acetate trihydrate/calcium L-lactate 4.5 hydrate, sodium acetate trihydrate/calcium propionate monohydrate, sodium acetate trihydrate/calcium tartrate tetrahydrate, sodium acetate trihydrate/calcium acetate, sodium acetate trihydrate/stearoyl calcium lactate, sodium acetate trihydrate/calcium chloride hexahydrate, sodium acetate trihydrate/calcium carbonate, and sodium acetate trihydrate/calcium hydroxide.

(2) Examples of the combination of the sodium salt of an organic acid or a hydrate thereof and the magnesium-containing compound include disodium succinate/magnesium L-glutamate, disodium succinate/magnesium chloride hexahydrate, disodium succinate/magnesium oxide, disodium L-tartrate dihydrate/magnesium L-glutamate, disodium L-tartrate dihydrate/magnesium chloride hexahydrate, disodium L-tartrate dihydrate/magnesium oxide, trisodium citrate dihydrate/magnesium L-glutamate, trisodium citrate dihydrate/magnesium chloride hexahydrate, sodium acetate trihydrate/magnesium L-lactate, sodium acetate trihydrate/magnesium chloride hexahydrate, and sodium acetate trihydrate/magnesium acetate.

(3) Examples of the combination of the sodium aminoate and the calcium-containing compound include monosodium L-glutamate monohydrate/calcium L-lactate 4.5 hydrate, monosodium L-glutamate monohydrate/calcium propionate, monosodium L-glutamate monohydrate/calcium tartrate tetrahydrate, monosodium L-glutamate monohydrate/calcium citrate, monosodium L-glutamate monohydrate/stearoyl calcium lactate, monosodium L-glutamate monohydrate/calcium chloride dihydrate, monosodium L-glutamate monohydrate/calcium carbonate, and monosodium L-glutamate monohydrate/calcium hydroxide.

(4) Examples of the combination of the sodium aminoate or a hydrate thereof and the magnesium-containing compound include monosodium L-glutamate monohydrate/magnesium L-glutamate, monosodium L-glutamate monohydrate/magnesium chloride hexahydrate, and monosodium L-glutamate monohydrate/magnesium oxide.

The anti-fog agent of the present invention can be easily prepared by dissolving the nonionic surfactant (A), the compound (C) or a hydrate thereof, and the water-soluble metal compound (D') in the aqueous medium. It is more preferred to previously dissolve the compound (C) or the hydrate thereof and the water-soluble metal compound (D') in the aqueous medium because of the large effect of inhibiting crystallization of the compound (C) in the coating film.

As used herein, the "aqueous medium" contains water as a main component and may be a mixed medium of water and a water-soluble organic solvent such as an alcohol, but is preferably water in view of anti-fog effects.

Regarding the ratio of the nonionic surfactant (A) to the compound (C) in the anti-fog agent, the total amount thereof is preferably within a range from 0.1 to 50% by weight, and particularly preferably from 0.2 to 20% by weight, based on the total weight of the anti-fog agent because the anti-fog agent is easily coated and poor appearance due to coating unevenness is less likely to occur.

In this case, the nonionic surfactant (A) is preferably used in an amount within a range from 0.05 to 35% by weight and the compound (C) is preferably used in an amount within a range from 0.02 to 25% by weight, based on the total weight of the anti-fog agent. It is particularly preferred that the nonionic surfactant (A) be used in an amount within a range from 0.1 to 15% by weight and that the compound (C) be used in an amount within a range from 0.05 to 10% by weight.

The anti-fog agent preferably contains the metal ion (D) in a proportion within a range from 1 to 500 ppm by weight because the effect of inhibiting crystallization of the compound (C) is sufficient and the coated surface is less likely to produce white cloudiness.

As long as the effect of the present invention is not adversely affected, liquid coating type antistatic agents, for example, anionic surfactants, may be added in the solution of the anti-fog agent.

If necessary, a silicone emulsion may be dispersed in the solution of the anti-fog agent.

The anti-fog agent described in detail of the present invention not only imparts superior anti-fog characteristics under low-temperature conditions of 10°C or less to the molded article, but is also superior in conformability of the anti-fog agent coating film during stretching during heat forming and exhibits excellent anti-fog effects in a deep drawn molded article.

The molded article of the present invention will now be described in detail.

The molded article of the present invention can be obtained by heating the anti-fog resin sheet described in detail using a direct heating system or an indirect heating system.

The heat forming method is not specifically limited and can be conducted by a conventionl method using a vacuum forming machine, a hot plate pressure forming machine or a vacuum pressure forming machine.

In the case of heat forming using the hot plate pressure forming machine, heating is usually conducted while the sheet surface coated with the anti-fog agent is in contact with the hot plate. The present invention has a feature that anti-fog effects are not reduced by the anti-fog agent peeling off or by the surface being roughened as a result of transfer of unevenness from the hot plate surface onto the sheet surface during the heat forming.

The vacuum forming method includes, for example, a drape forming method or a plug assisted method. In these forming methods, the surface coated with the anti-fog agent and the mold or plug are in contact with each other. However, according to the present invention, the anti-fog agent does not easily come off.

As described above, the molded article obtained by such a method preferably has a center line average roughness Ra of less than 0.15 μm. More preferably, the molded article has a center line average roughness Ra of less than 0.10 μm because a uniform film of water is formed on the surface of the molded article, thereby making it possible to visually observe contents clearly from the outside of the molded article.

When using the anti-fog resin sheet of the present invention as a bag for packaging food after being formed into a bag by heat sealing, the center line average roughness Ra is preferably less than 0.10 μm, since the surface roughness after forming into a bag is the same as that of the resin sheet.

The molded article of the present invention can be applied to a deep-drawn article because of superior conformability of the anti-fog coating layer during molding, and specifically, a draw ratio (drawing depth/length of opening portion) is preferably within a range of from 0.05 to 0.5.

The molded article of the present invention is particularly suitable for use as anti-fog transparent covers for food containers such as lunch boxes, side-dish containers, sushi containers, sashimi containers and the like.

EXAMPLES

The following Examples further illustrate the present invention in detail; however, the present invention is not limited to these Examples.

Example 1

An anti-fog agent (1) was prepared by dissolving sucrose laurate ester ("RIKEMAL A" manufactured by Riken Vitamin Co., Ltd., HLB: 15, solid content: 40% by weight) in an amount of 0.2% by weight in terms of solid content and disodium L-tartrate dihydrate in an amount of 0.1% by weight in distilled water, and adding calcium chloride dihydrate in an amount of 50 ppm by weight.

One surface of a 0.30 mm thick biaxially oriented polystyrene sheet whose surface is not subjected to a coating treatment ("DIC SHEET GK", manufactured by Dainippon Ink & Chemicals, Inc.) (hereinafter abbreviated to "OPS sheet") was subjected to a corona treatment at a wetting coefficient of 500 μN/cm or less, and then the corona-treated surface was coated with the resulting anti-fog agent (1) using an electric coater, "MODEL YOA-A" manufactured by Yoshimitsu Seiki Co., Ltd. (applicator: "MODEL YA-4", coating width: 150 mm, clearance: 0.10 mm) and dried to obtain an anti-fog resin sheet (1). In this case, an anti-fog resin sheet (1-1) was obtained by coating with the anti-fog agent at a coating weight of 80 mg/m$^2$ by solid content (dry solid content), while an anti-fog resin sheet (1-2) was obtained by coating with the anti-fog agent at a coating weight of 40 mg/m$^2$ by solid content.

With respect to quantitative analysis of the coating weight of the anti-fog agent, an infrared absorption spectrum of the sheet surface was measured by the multiple internal reflection method (ATR method) using Fourier transform infrared spectroscopy (FTIR) and a working curve was made by using a standard sample whose coating weight is known, and then determination was conducted (the same procedures were similarly applied in the following).

The ratio of the amount of sodium L-tartrate to that of calcium L-tartrate in the coating film of the anti-fog resin sheet (1-1) was $1/(2.9 \times 10^{-4})$ in terms of the molar ratio of the former to the latter.

The resulting anti-fog resin sheet (1-2) was formed into a molded article (1-2) in the following mold using a hot plate pressure forming machine. The molding temperature (hot plate temperature) was set to 130°C which is about 30°C higher than the glass transition temperature of the resin sheet. The other conditions were based on the condition where the molding uniformity of the corner portion of the mold described below becomes 80% or more. As used herein, the term "molding uniformity of 80% or more" means that the corner portion of the resulting formed article, which corresponds to the corner portion having a corner radius 2R of the mold, has a corner radius of 2.5 R or less. The hot plate pressure forming pressure (pressure required to bring the sheet into contact with the heated sheet) was 0.1 MPa.

Mold: 94 mm in length, 94 mm in width and 30 mm in depth (corner portion: 2R)

Draw ratio (drawing depth/length of opening portion) = 0.31

Regarding the resulting anti-fog sheet (1-1), a change in transparency and a crystal deposition state of the surface coated with the anti-fog agent were evaluated before and after coating with the anti-fog agent. Regarding the resulting molded article (1-2), the surface roughness of the surface coated with the anti-fog agent was measured and anti-fog effects of the surface coated with the anti-fog agent were evaluated. The results are shown in Table 1.

Evaluation of the change in transparency and the crystal deposition state of the surface coated with the anti-fog agent, measurement of the surface roughness of the molded article, and evaluation of anti-fog effects of the molded article were performed as follows.

Evaluation of Change in Transparency of Sheet

Regarding the anti-fog resin sheet (1-1), the change in Haze Value of the sheet was measured before and after coating with the anti-fog agent and the results were evaluated according to the following criteria.

◎ : change in Haze Value < +0.2%

○ : +0.2% ≤ change in Haze Value < +0.5%

△ : +0.5% ≤ change in Haze Value < +1.5%

× : +1.5% ≤ change in Haze Value

Evaluation of Crystallization State of Sheet

The anti-fog resin sheet (1-1) was allowed to stand at room temperature for one week, and the crystal deposition state of the surface coated with the anti-fog agent was evaluated according to the following criteria.

○ : crystallization was not observed

△ : crystallization was observed partially

× : crystallization was observed over the entire surface

Measurement of Surface Roughness of Molded Article

Using a surface roughness and contour measuring instrument "SURFCOM RA130" (manufactured by Tokyo Seimitsu Co., Ltd.) (contact probe radius: 5 μm), the surface coated with the anti-fog agent of the molded article (1-2) was measured under the following conditions in accordance with Japanese Industrial Standard (JIS B0601-1982).

Measuring length: 1.25 mm
Measuring speed: 0.3 mm/s
Cut-off value: 0.25 mm
Cut-off ratio: 300
Approximation curve: Gaussian

Evaluation of Anti-fog Effects of Molded Article

After charging 100 ml of water at 25°C in the molded article (1-2), the molded article (1-2) was capped with another molded article (1-2) placed upside down, was sealed with tape on four sides, and was then allowed to stand in a refrigerator at 5°C for 30 minutes. Then, the ratio of water droplets adhering on the top of the molded article (1-2) placed upside down was visually observed according to the following criteria.

◎ : area to which water droplets adhere < 5% (film of water uniformly forms on the surface and no fogging occurs on the top surface)
○ : 5% ≤ area to which water droplets adhere < 10% (large water droplets adhere and fogging occurs on a portion of the top surface)
△ : 10% ≤ area to which water droplets adhere < 50% (small water droplets adhere and fogging occurs on approximately half the top surface)
× : 50% ≤ area to which water droplets adhere (fine water droplets adhere and fogging occurs on the entire top surface)

Example 2

An anti-fog agent (2) was prepared by dissolving sucrose laurate ester in an amount of 0.2% by weight in terms of solid content and disodium L-tartrate monohydrate in an amount of 0.1% by weight in distilled water, and adding calcium chloride dihydrate in an amount of 50 ppm by weight.
In the same manner as in Example 1, except that the resulting anti-fog agent (2) was used, anti-fog resin sheets (2-1) and (2-2) as well as a molded article (2-2) were obtained. Then, evaluation of the change in transparency and the crystallization state of the sheet, as well as evaluation of anti-fog effects of the molded article, were conducted in the same manner as in Example 1, except that these anti-fog resin sheets and the molded article were used. The results are shown in Table 1.
The ratio of the amount of sodium L-tartrate and that of calcium L-glutamate in the coating film of the anti-fog resin sheet (2-1) was $1/(5 \times 10^{-4})$ in terms of the molar ratio of the former to the latter.

Example 3

An anti-fog agent (3) was prepared by dissolving sucrose laurate ester in an amount of 0.2% by weight in terms of solid content and disodium L-tartrate dihydrate in an amount of 0.1% by weight in distilled water, and adding calcium chloride hexahydrate in an amount of 50 ppm by weight.

In the same manner as in Example 1, except that the resulting anti-fog agent (3) was used, anti-fog resin sheets (3-1) and (3-2) as well as a molded article (3-2) were obtained. Then, evaluation of the change in transparency and the crystallization state of the sheet, as well as evaluation of anti-fog effects of the molded article, were conducted in the same manner as in Example 1, except that these anti-fog resin sheets and the molded article were used. The results are shown in Table 1.

The ratio of the amount of sodium L-tartrate and that of magnesium L-tartrate in the coating film of the anti-fog resin sheet (3-1) was $1/(5 \times 10^{-4})$ in terms of the molar ratio of the former to the latter.

Example 4

An anti-fog agent (4) was prepared by dissolving sucrose laurate ester in an amount of 0.2% by weight in terms of solid content and disodium L-tartrate dihydrate in an amount of 0.1% by weight in distilled water, and adding calcium chloride dihydrate in an amount of 500 ppm by weight.

In the same manner as in Example 1, except that the resulting anti-fog agent (4) was used, anti-fog resin sheets (4-1) and (4-2) as well as a molded article (4-2) were obtained. Then, evaluation of the change in transparency and the crystallization state of the sheet, as well as evaluation of anti-fog effects of the molded article, were conducted in the same manner as in Example 1, except that these anti-fog resin sheets and the molded article were used. The results are shown in Table 1.

The ratio of the amount of sodium L-tartrate and that of calcium L-tartrate in the coating film of the anti-fog resin sheet (4-1) was $1/(2.9 \times 10^{-3})$ in terms of the molar ratio of the former to the latter.

Example 5

An anti-fog agent (5) was prepared by dissolving sucrose laurate ester in an amount of 0.2% by weight in terms of solid content and disodium L-tartrate dihydrate in an amount of 0.1% by weight in distilled water, and adding calcium L-lactate in an amount of 500 ppm by weight.

In the same manner as in Example 1, except that the resulting anti-fog agent (5) was used, anti-fog resin sheets (5-1) and (5-2) as well as a molded article (5-2) were obtained. Then, evaluation of the change in transparency and the crystallization state of the sheet, as well as evaluation of anti-fog effects of the molded article, were conducted in the same manner as in Example 1, except that these anti-fog resin sheets and the molded article were used. The results are shown in Table 1.

The ratio of the amount of sodium L-tartrate and that of calcium L-tartrate in the coating film of the anti-fog resin sheet (5-1) was $1/(5 \times 10^{-3})$ in terms of the molar ratio of the former to the latter.

Example 6

In the same manner as in Example 1, except that, using the anti-fog sheet (1-2) obtained in Example 1, the hot plate pressure forming pressure was set to 0.3 MPa, which is larger than 0.1 MPa, in the case of Example 1 and the anti-fog surface of the sheet was brought into firm contact with the hot plate, molding was conducted to obtain a molded article (6-2).

In the same manner as in Example 1, except that the resulting molded article (6-2) was used, the surface roughness of the molded article was measured. Then, anti-fog effects of the molded article were evaluated. The center line average roughness Ra of the molded article (6-2) was 0.11 μm and the anti-fog effects were rated "○".

Table 1

| | | | Examples | | | | |
|---|---|---|---|---|---|---|---|
| | | | 1 | 2 | 3 | 4 | 5 |
| (A) | | Concentration of sucrose laurate ester (%) | 0.2 | 0.2 | 0.2 | 0.2 | 0.2 |
| (C) | | Concentration of disodium L-tartrate dihydrate (%) | 0.1 | | 0.1 | 0.1 | 0.1 |
| | | Concentration of monosodium L-glutamate monohydrate (%) | | 0.1 | | | |
| (D) | | Concentration of calcium ion (ppm) | 14 | 14 | | 136 | 92 |
| | | Concentration of magnesium ion (ppm) | | | 6 | | |
| Change in transparency of sheet | | | ◎ | ◎ | ◎ | ○ | ○ |
| Crystallization state of sheet | | | ○ | ○ | ○ | ○ | ○ |
| Center line average roughness Ra of molded article (μm) | | | 0.03 | – | – | – | – |
| Anti-fog effects of molded article | | | ◎ | ◎ | ◎ | ◎ | ○ |

As is apparent from Table 1 and the results of Example 6, all sheets had good transparency and crystallization of the compound (B') was not observed. All molded articles were superior in anti-fog effects. However, an increase in quantity of the metal ion (C) tended to lower the transparency of the sheet. Although the same sheet is used in Example 1 and Example 6, Example 1 (Ra = 0.03 μm) having small center line average roughness Ra of the anti-fog surface of the molded article was superior in anti-fog effects to Example 6 (Ra = 0.11 μm) having large Ra.

Comparative Example 1

A comparative anti-fog agent (1') was prepared by dissolving sucrose laurate ester in an amount of 0.3% by weight in terms of solid content in distilled water.
In the same manner as in Example 1, except that the resulting comparative anti-fog agent (1') was used, comparative anti-fog resin sheets (1'-1) and (1'-2) as well as a comparative molded article (1'-2) were obtained. Then, evaluation of the change in transparency and the crystallization state of the sheet, as well as evaluation of anti-fog effects of the molded article, were conducted in the same manner as in Example 1, except that these anti-fog resin sheets and the molded article were used. The results are shown in Table 2.

Comparative Example 2

A comparative anti-fog agent (2') was prepared by dissolving sucrose laurate ester in an amount of 0.2% by weight in terms of solid content and disodium L-tartrate dihydrate in an amount of 0.1% by weight in distilled water.
In the same manner as in Example 1, except that the resulting comparative anti-fog agent (2') was used and the clearance of the application was controlled at 0.05 mm, comparative anti-fog resin sheets (2'-1) and (2'-2) as well as a comparative molded article (2'-2) were obtained. Then, evaluation of the change in transparency and the crystallization state of the sheet, as well as evaluation of anti-fog effects of the molded article, were conducted in the same manner as in Example 1, except that these anti-fog resin sheets and the molded article were used. The results are shown in Table 2.

Comparative Example 3

A comparative anti-fog agent (3') was prepared by dissolving sucrose laurate ester in an amount of 0.4% by weight in terms of solid content and decaglycerin laurate ester in an amount of 0.2% by weight in distilled water.

In the same manner as in Example 1, except that the resulting comparative anti-fog agent (3') was used, comparative anti-fog resin sheets (3'-1) and (3'-2) as well as a comparative molded article (3'-2) were obtained. Then, evaluation of the change in transparency and the crystallization state of the sheet, as well as evaluation of anti-fog effects of the molded article, were conducted in the same manner as in Example 1, except that these anti-fog resin sheets and the molded article were used. The results are shown in Table 2.

Table 2

|  |  | Comp. Examples | | |
| --- | --- | --- | --- | --- |
|  |  | 1 | 2 | 3 |
| (A) | Concentration of sucrose laurate ester (%) | 0.3 | 0.2 | 0.4 |
| (C) | Concentration of disodium L-tartrate dihydrate (%) |  | 0.1 |  |
|  | Concentration of decaglycerin laurate ester (ppm) |  |  | 0.2 |
| Change in transparency of sheet | | ◎ | ◎ | ◎ |
| Crystallization state of sheet | | ○ | × | ○ |
| Anti-fog effects of molded article | | △ | ◎ | △ |

As is apparent from Table 2, although the appearance of the sheet of Comparative Example 1 was good, anti-fog effects of the molded article under low-temperature conditions were insufficient. In Comparative Example 2 using the compound (B) in combination, although anti-fog effects of the molded article were good, crystal deposition occurred. Furthermore, Comparative Example 3 using sucrose fatty acid ester in combination with polyglycerin fatty acid ester was inferior in anti-fog effects under low-temperature conditions.

Example 7

In the same manner as in Example 1, except that a 0.30 mm thick transparent styrene-butadiene-methyl methacrylate copolymer resin sheet ("DIC SHEET V", manufactured by Dainippon Ink & Chemicals, Inc.) (hereinafter abbreviated to "special PS sheet") was used in place of the oriented polystyrene sheet, and that the molding temperature (hot plate temperature) was changed to 120°C, anti-fog resin sheets (7-1) and (7-2) and a molded article (7-2) were obtained.

Then, evaluation of the change in transparency and the crystallization state of the sheet, as well as evaluation of anti-fog effects of the molded article, were conducted in the same manner as in Example 1, except that the resulting sheet (7-1) and the molded article (7-2) were used. The results are shown in Table 3.

The ratio of the amount of sodium L-tartrate and that of calcium L-tartrate in the coating film of the anti-fog resin sheet (7-1) was $1/(2.9 \times 10^{-4})$ in terms of the molar ratio of the former to the latter.

Example 8

In the same manner as in Example 1, except that a 0.30 mm thick undrawn sheet obtained by extruding an amorphous polyethylene terephthalate resin (hereinafter abbreviated to "A-PET sheet") was used in place of the oriented polystyrene sheet, and that the molding temperature (hot plate temperature) was changed to 110°C, anti-fog resin sheets (8-1) and (8-2) as well as a molded article (8-2) were obtained.

Then, evaluation of the change in transparency and the crystallization state of the sheet, as well as evaluation of anti-fog effects of the molded article, were conducted in the same manner as in Example 1, except that the resulting sheet (8-1) and the molded article (8-2) were used. The results are shown in Table 3.

The ratio of the amount of sodium L-tartrate and that of calcium L-tartrate in the coating film of the anti-fog resin sheet (8-1) was $1/(2.9 \times 10^{-4})$ in terms of the molar ratio of the former to the latter.

Comparative Example 4

In the same manner as in Example 1, except that the special PS sheet was used in place of the oriented polystyrene sheet, that the anti-fog agent (1') was used in place of the anti-fog agent (1), and that the molding temperature (hot plate temperature) was changed to 120°C, comparative anti-fog resin sheets (4'-1) and (4'-2) as well as a comparative molded article (4'-2) were obtained.

Then, evaluation of the change in transparency and the crystallization state of the sheet, as well as evaluation of anti-fog effects of the molded article, were conducted in the same manner as in Example 1, except that the resulting comparative anti-fog sheet (4'-1) and comparative molded article (4'-2) were used. The results are shown in Table 3.

Comparative Example 5

In the same manner as in Example 1, except that the A-PET sheet was used in place of the oriented polystyrene sheet, that the anti-fog agent (2') was used in place of the anti-fog agent (1), and that the molding temperature (hot plate temperature) was changed to 110°C, comparative anti-fog resin sheets (5'-1) and (5'-2) as well as a comparative molded article (5'-2) were obtained.

Then, evaluation of the change in transparency and the crystallization state of the sheet, as well as evaluation of anti-fog effects of the molded article, were conducted in the same manner as in Example 1, except that the resulting comparative anti-fog sheet (5'-1) and comparative molded article (5'-2) were used. The results are shown in Table 3.

Table 3

| | | Examples | | Comp. Examples | |
|---|---|---|---|---|---|
| | | 7 | 8 | 4 | 5 |
| (A) | Concentration of sucrose laurate ester (%) | 0.2 | 0.2 | 0.3 | 0.2 |
| (C) | Concentration of disodium L-tartrate dihydrate (%) | 0.1 | 0.1 | | 0.1 |
| (D) | Concentration of calcium ion (ppm) | 14 | 14 | | |
| Kind of resin sheet | | special PS | A-PET | special PS | A-PET |
| Change in transparency of sheet | | ◎ | ◎ | ◎ | ◎ |
| Crystallization state of sheet | | ○ | ○ | ○ | × |
| Anti-fog effects of molded article | | ◎ | ◎ | △ | ◎ |

As is apparent from Table 3, Examples 7 and 8 using the special PS and A-PET sheets had good appearance and exhibited excellent anti-fog effects under low-temperature conditions, similar to that of the oriented polystyrene sheet of Example 1. In Comparative Example 4, although the appearance was good, anti-fog effects under low-temperature conditions were insufficient, which is similar to Comparative Example 1 using the oriented polystyrene sheet.

In Comparative Example 5, although anti-fog effects under low-temperature conditions were excellent, crystals of sodium L-tartrate were formed in the form of dendrites, resulting in poor appearance.

**Claims**

1. An anti-fog resin sheet comprising a resin sheet and an anti-fog coating film formed on the surface of the resin sheet, wherein the anti-fog coating film is composed of a nonionic surfactant (A) and a metal carboxylate salt compound (B) and the metal carboxylate salt compound (B) has a hydrate forming ability and is in an amorphous state.

2. The anti-fog resin sheet according to claim 1, wherein the metal carboxylate salt compound (B) is composed of a metal carboxylate salt compound (B1) having a hydrate forming ability, and a metal carboxylate salt compound (B2) composed of the same carboxylate anion as that of the compound (B1) and a metal ion different from that of the compound (B1).

3. The anti-fog resin sheet according to claim 1, wherein the nonionic surfactant (A) has a hydrophilic-lipophilic balance value of 10 to 18.

4. The anti-fog resin sheet according to claim 2, wherein a molar ratio of the metal carboxylate salt compound (B2) to the metal carboxylate salt compound (B1), (B1/B2), is from $10^4/1$ to $10^2/1$.

5. The anti-fog resin sheet according to claim 4, which contains the metal carboxylate salt compound (B) in an amount of 0.1 to 1 part by weight based on 1 part by weight of the nonionic surfactant (A).

6. An anti-fog agent comprising a nonionic surfactant (A), a metal carboxylate salt compound (C) having a hydrate forming ability, and a metal ion (D) of a metal atom having a first ionization energy which is higher than that of a metal ion in the metal carboxylate salt compound (C).

7. The anti-fog agent according to claim 6, wherein the nonionic surfactant (A) has a hydrophilic-lipophilic balance value of 10 to 18.

8. The anti-fog agent according to claim 7, wherein a metal atom constituting the metal carboxylate salt in the metal carboxylate salt compound (C) having a hydrate forming ability is a sodium atom, or a metal atom having a first ionization energy which is lower than that of the sodium atom.

9. The anti-fog agent according to claim 6, wherein the metal carboxylate salt compound (C) having a hydrate forming ability is mixed in an amount of 0.1 to 1 part by weight based on 1 part by weight of the nonionic surfactant (A).

10. The anti-fog agent according to claim 6, wherein the metal ion (D) is introduced into the anti-fog agent by dissolving a water-soluble metal salt compound (D') in an aqueous medium.

11. The anti-fog agent according to claim 6, wherein the nonionic surfactant (A) and the metal carboxylate salt compound (C) having a hydrate forming ability are dissolved in an amount so that the total amount thereof is from 0.2 to 20% by weight in an aqueous medium and the metal ion (D) is contained in an amount of 1 to 500 ppm by weight based on the anti-fog agent.

12. A molded article produced by molding the anti-fog resin sheet of any one of claims 1 to 5.

13. The molded article according to claim 12, wherein a center line average roughness Ra of the surface coated with the anti-fog agent is 0.15 $\mu$m or less.